(19) Europäisches Patentamt
European Patent Office
Office européen des brevets

(11) **EP 3 730 750 B1**

(12) **EUROPÄISCHE PATENTSCHRIFT**

(45) Veröffentlichungstag und Bekanntmachung des Hinweises auf die Patenterteilung:
**28.01.2026 Patentblatt 2026/05**

(21) Anmeldenummer: **20168501.3**

(22) Anmeldetag: **07.04.2020**

(51) Internationale Patentklassifikation (IPC):
**F01M 1/18** (2006.01)　　　**F01M 11/10** (2006.01)

(52) Gemeinsame Patentklassifikation (CPC):
**F01M 1/18; F01M 11/10;** F02D 2250/11;
F16N 2270/50

(54) **VERFAHREN ZUR BILANZIERUNG EINER KRAFTSTOFFMASSE IN EINEM SCHMIERMITTEL EINES VERBRENNUNGSMOTORS, VERBRENNUNGSMOTOR UND KRAFTFAHRZEUG**

METHOD FOR BALANCING A FUEL MASS IN A LUBRICANT OF A COMBUSTION CHAMBER, COMBUSTION ENGINE AND MOTOR VEHICLE

PROCÉDÉ D'ÉQUILIBRAGE D'UNE MASSE DE CARBURANT DANS UN LUBRIFIANT D'UN MOTEUR À COMBUSTION INTERNE, MOTEUR À COMBUSTION INTERNE ET VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.04.2019 DE 102019205846**

(43) Veröffentlichungstag der Anmeldung:
**28.10.2020 Patentblatt 2020/44**

(73) Patentinhaber: **VOLKSWAGEN AG**
**38440 Wolfsburg (DE)**

(72) Erfinder:
• **Schüttler, Torsten**
**38444 Wolfsburg (DE)**
• **Willsch, Mathias**
**38550 Isenbüttel (DE)**
• **Schönbeck, Jörg**
**31715 Meerbeck (DE)**

(56) Entgegenhaltungen:
EP-A1- 2 450 540　　　DE-B3- 102012 221 507
DE-B4- 102013 224 963　　FR-A1- 2 866 957
US-A1- 2006 201 487　　US-A1- 2008 295 491

**Beschreibung**

Die folgende Erfindung betrifft ein Verfahren zur Bilanzierung einer Kraftstoffmasse in einem Schmiermittel eines Verbrennungsmotors beim Betrieb des Verbrennungsmotors. Die Erfindung betrifft weiterhin ein Steuergerät, das ausgebildet und eingerichtet ist, um ein solches Verfahren auszuführen, sowie einen Verbrennungsmotor und ein Fahrzeug, in dem das erfindungsgemäße Verfahren mithilfe eines geeigneten Steuergeräts ausgeführt wird.

Um die Lebensdauer von modernen Motoren für einen Mindestzeitraum gewährleisten zu können, ist die zuverlässige Versorgung mit Schmiermittel an den zu schmierenden Komponenten wichtig. Dazu werden Schmieröle verwendet, deren Eigenschaften mit Additiven zum Beispiel hinsichtlich Oxidationsstabilität, Korrosionsschutz, Fressschutz oder Viskositäts-Temperaturverhalten optimiert werden. Dabei sollen insbesondere die Systemeigenschaften wie Reibung und Verschleiß berücksichtigt werden.

Beim Betrieb eines Verbrennungsmotors können sich jedoch die Schmiereigenschaften des Motoröls durch Kraftstoffeintrag während des Betriebs verändern. Im ungünstigsten Fall können sich die Eigenschaften des Motoröls oder des Schmiermittels so verändern, dass keine wunschgemäße Schmierung mehr stattfinden kann und im Verbrennungsmotor irreversible Schäden und damit ein vorzeitiger Ausfall von Motorkomponenten auftreten können.

So verringert ein Kraftstoffeintrag in das Motoröl dessen Viskosität. Dadurch werden die Schmierfilmschichtdicken in den Lagern verringert und ein Lagerverschleiß durch erhöhte Mischreibung verstärkt. So verringert bereits ein Kraftstoffanteil von 4 % die Viskosität des Motoröls um eine SAE-Klasse. Diese SAE (Society of Automotive Engineers)-Klassifizierung dient der Viskositätskennzeichnung von Motorölen. Sie informiert über die Temperaturbereiche, in denen die Öle eingesetzt werden. Kleine Kennziffern kennzeichnen dünnflüssige Öle (niedrige Viskosität) und größere Kennziffern bezeichnen zähflüssigere Öle (höhere Viskosität). Dieser Kraftstoffeintrag kann auch durch Ausdampfen des Kraftstoffanteils bei betriebswarmem Schmiermittel wieder rückgängig gemacht werden. Dadurch kann die ursprüngliche Viskosität wiederhergestellt werden.

Allerdings führt aus dem Motoröl ausgasender Kraftstoff, der durch die Kurbelgehäuseentlüftung in den Ansaugtrakt (Frischluftzufuhr) des Verbrennungsmotors geführt wird, möglicherweise zu einer unerwünschten Überfettung des Luftkraftstoffgemisches. Die Überfettungsgefahr wächst mit der Steigung der Siedekurve des Kraftstoffs. Mischkraftstoffe wie E25 können in einem engen Öltemperaturbereich nahezu schlagartig ausdampfen und damit eine starke Überfettung des Luft-Kraftstoffgemisches verursachen.

Im Schmiermittel oder Motoröl angereicherter Kraftstoff erhöht - abgesehen von der Absenkung der Viskosität - auch die Flüssigkeitsmenge im Schmiermittelkreislauf. Dadurch können bei Nasssumpfschmiersystemen Fehlmessungen auftreten, die zum Auslösen der Überfüllwarnung des Motorölversorgungssystems führen können. Durch die erhöhte Flüssigkeitsmenge (Flüssigkeitsmasse) entstehen zusätzliche Planschverluste, die die Verlustleistung des Verbrennungsmotors erhöhen, wenn der Motorölfüllstand ein kritisches Maß überschreitet.

FR 2 866 957 A1 offenbart ein Verfahren zur Bestimmung einer Schmierölverdünnungsrate einer Wärmekraftmaschine eines Kraftfahrzeugs. Die Schmierölverdünnungsrate wird anhand eines Verdünnungsmoduls und eines Verdampfungsmodule bestimmt. Das Verdünnungsmodul ist ein Modul, um den Verdünnungsgrad der Ölverdünnung durch den Kraftstoff anhand eines Ölverdünnungskennfelds zu ermitteln. Das Ölverdünnungskennfeld ist von der Motordrehzahl, dem Kraftstoffdurchsatz und der Motorbetriebsart abhängig. Das Verdampfungsmodul ist ein Modul, um die Verdunstung des Schmieröls anhand eines Ölverdampfungskennfelds zu ermitteln. Das Ölverdampfungskennfeld ist von Motordrehzahl, Kraftstoffdurchfluss, Motorbetriebsart und Öltemperatur abhängig.

Es gibt Ansätze, bei denen mithilfe eines Modells ein Kraftstoffeintrag und ein Kraftstoffaustrag aus dem Schmiermittel, sprich dem Motoröl, berücksichtigt werden. Durch die Bestimmung eines Verdünnungswerts, wie es beispielsweise aus der DE 10 2014 013 709 A1 bekannt ist, lässt sich zwar der Zustand, also die Qualität des Schmiermittels einschätzen, allerdings bleibt eine Veränderung der Schmiermittelmasse, die durch den Motorölein- bzw. -austrag verursacht wird, unberücksichtigt.

Es besteht also die Aufgabe, ein verbessertes Verfahren bereitzustellen, das zur Bilanzierung einer Kraftstoffmasse in einem Schmiermittel geeignet ist.

Diese Aufgabe wird durch das erfindungsgemäße Verfahren gemäß Anspruch 1, ein Steuergerät gemäß Anspruch 9 und einen Verbrennungsmotor gemäß Anspruch 10 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung.

Das erfindungsgemäße Verfahren zur Bilanzierung einer Kraftstoffmasse in einem Schmiermittel eines Verbrennungsmotors beim Betrieb des Verbrennungsmotors zeichnet sich durch folgende Schritte aus:

- Starten eines Betriebszyklus des Verbrennungsmotors,
- Erfassen eines Betriebsmodus,
- Bestimmen einer Motorölmasse,
- kontinuierliches Bestimmen einer Kraftstoffdifferenzmasse in der Motorölmasse,

- kontinuierliches Bestimmen einer Kraftstoffsumme aus einem Startwert der Kraftstoffsumme und aus der Kraftstoffdifferenzmasse,
- Bestimmung eines normierten Kraftstoffäquivalents aus der Kraftstoffdifferenzmasse.

Das Verfahren läuft beim Betrieb des Verbrennungsmotors ab und wird mit dem Starten eines Betriebszyklus des Verbrennungsmotors gestartet. Beim Schritt Erfassen eines Betriebsmodus wird ein bestimmter Betriebsmodus des Verbrennungsmotors erfasst und kann nach bestimmten Kriterien beurteilt und eingeordnet werden. So kann eine überschaubare Anzahl von Betriebsmodi definiert werden, in denen beispielsweise ein unterschiedlicher Kraftstoffein- bzw. Kraftstoffaustrag stattfindet. So können beispielsweise Betriebsmodi vorgesehen werden, in denen die Veränderung der Kraftstoffmasse in einem Schmiermittel in entsprechend angepassten Modellen bestimmbar ist. Unterschiedliche Betriebsmodi können beispielsweise sein: Kaltstart, Regeneration eines Partikelfilters und unterschiedliche Kombinationen von Last-, Drehzahl- und/oder Temperaturzuständen des Motors selbst in Verbindung mit verschiedenen Umgebungs- bzw. Umweltbedingungen. Die Klassifizierung typischer Betriebsmodi erlaubt es, den gesamten Betriebsbereich eines Verbrennungsmotors auf eine begrenzbare Anzahl typischer und relevanter Betriebsmodi abzubilden, für die dann eine sogenannte Kraftstoffdifferenzmasse während des Betriebs bestimmbar ist (siehe unten).

Das Bestimmen einer (Ausgangs-)Motorölmasse bildet den Startpunkt des Verfahrens. Zur Bestimmung der Ölmasse dient beispielsweise ein Ölfüllstandssignal, eine gegebenenfalls erfasste Ölnachfüllmenge. Dabei kann auch gegebenenfalls ein Statussignal des Ölfüllstands berücksichtigt werden. Das Statussignal gibt die Qualität der Ölfüllstandsbestimmung an. Wenn z. B. ein Mittelwert der Ölfüllstandswerte während der Fahrt gebildet wird, erhöht sich die Qualität der Messung, wenn die Mindeststrecke zur Mittelung erreicht ist.

Ausgehend von dieser Motorölmasse wird dann kontinuierlich eine Kraftstoffdifferenzmasse in der Motorölmasse bestimmt. Dabei wird in Abhängigkeit vom jeweils relevanten Betriebsmodus, der sich auch innerhalb eines Betriebszyklus während des Ablaufs des Verfahrens verändern kann, ein Kraftstoffeintrag in das Motoröl bzw. ein Kraftstoffaustrag aus dem Motoröl berücksichtigt. Der entspricht jeweils einer positiven oder negativen Kraftstoffdifferenzmasse.

Ausgehend von einem Startwert einer Kraftstoffsumme (im Schmiermittel) wird dann die Kraftstoffsumme während des Betriebszyklus kontinuierlich unter Berücksichtigung einer summierten Kraftstoffdifferenzmasse bestimmt. Aus dieser Kraftstoffsumme wird dann schließlich ein normiertes Kraftstoffäquivalent bestimmt, welches Bestandteil eines Algorithmus sein kann, mit dem ein Ölwechselintervall bzw. ein Ölwechselzeitpunkt bestimmbar ist.

Das erfindungsgemäße Verfahren erlaubt es so, auf der Grundlage vergleichsweise einfacher Modelle die Kraftstoffdifferenzmasse in der Motorölmasse zu bestimmen und in Form eines normierten Kraftstoffäquivalents eine Größe bereitzustellen, welche die Bestimmung eines Ölwechselzeitpunkts bzw. die Berechnung eines Ölwechselintervalls deutlich verbessert.

In einer Weiterbildung des Verfahrens wird in Abhängigkeit vom Betriebsmodus wechselseitig ein Kraftstoffeintrag oder ein Kraftstoffaustrag bestimmt. Die Betriebsmodi werden dazu in zwei Gruppen eingeteilt. Dabei gibt es eine Betriebsmodusgruppe, bei der in den unterschiedlichen Betriebsmodi ein Kraftstoffeintrag stattfindet, und eine andere Betriebsmodusgruppe, in der Betriebsmodi berücksichtigt werden, bei denen ein Kraftstoffaustrag bestimmt wird. Dies schafft eine Möglichkeit, die Betriebsparameter einzuschränken und die Modelle damit zu vereinfachen, ohne dass eine qualitative Verschlechterung des Verfahrens zu erwarten wäre.

In einer Weiterbildung des Verfahrens wird beim Erfassen eines dieser Betriebsmodi dabei grundsätzlich zwischen solchen Betriebsmodi mit Kraftstoffeintrag und solchen Betriebsmodi mit Kraftstoffaustrag unterschieden und damit die zu berücksichtigenden Betriebsparameter (Gruppen) festgelegt.

In einer Weiterbildung des Verfahrens wird in einem Betriebsmodus mit Kraftstoffeintrag der Kraftstoffeintrag auf der Grundlage eines der folgenden Betriebsparameter bestimmt: Momentenanforderung, Motortemperatur und Motordrehzahl.

Ein weiterer Betriebsparameter kann beispielsweise der Regenerationsstatus eines Partikelfilters sein, bei dessen Regenerationsvorgang zusätzlicher Kraftstoff eingespritzt wird und über die Zylinderwände in das Schmiermittel gelangen kann. Die Betriebsgrößen Momentenanforderung, Motortemperatur und Motordrehzahl bilden leicht bestimmbare Größen, denen applizierte Kraftstoffeintragsmengen (in Gewichtsprozent) in Abhängigkeit von einem Betriebsmodus zugeordnet werden können und die dann auf die Motorölmasse normiert werden.

Wahlweise kann eine Verriegelungsfunktion sicherstellen, dass kein Kraftstoffeintrag bestimmt wird, wenn Fehler bei der Bestimmung dieser Betriebsgrößen auftreten. Ein solcher Fehler kann beispielsweise erkannt werden, wenn beispielsweise durch Sensorfehler sinnlose Betriebsparameterkombinationen auftreten.

In einer Weiterbildung des Verfahrens werden in den Betriebsmodi mit einem Kraftstoffaustrag die folgenden Betriebsparameter berücksichtigt: Motoröltemperatur und inneres Moment. Diese Betriebsgrößen erlauben ebenfalls einfache Modelle zur Bestimmung eines Kraftstoffaustrags während des Betriebs. So dampft beispielsweise bei erhöhter Motoröl- bzw. Schmiermitteltemperatur ein höherer Anteil an Kraftstoff aus dem Schmiermittel aus.

Bei Betätigung der Kolbenkühldüsen wird Schmiermittel im Kurbelgehäuse gegen die Kolben gesprüht. Dadurch wird die Motoröltemperatur im Kühlkanal reduziert und damit auch der Austrag des Schmiermittels durch Ausdampfen. Er kann so als einfacher Korrekturfaktor dienen.

Ein wichtiges Indiz für den Kraftstoffaustrag lässt sich auch aus dem inneren Moment ableiten, bei dem die Haupteinflussgrößen der Gemischbildung und der Zündung berücksichtigt werden, nämlich die Frischgasfüllung, der Zündwinkel und der Lambdawert. Auch diese Größen sind leicht bestimmbar und zur Bildung eines einfachen, zuverlässigen Modells geeignet.

In einer Weiterbildung des Verfahrens wird der Kraftstoffeintrag und/oder der Kraftstoffaustrag unter Verwendung eines wenigstens einen der oben genannten Betriebsparameter berücksichtigenden Kennfelds bestimmt. Die entsprechenden Kennfelder zur Bestimmung des Kraftstoffeintrags bzw. des Kraftstoffaustrags werden in Prüfstandsimulationen und/oder Modellrechnungen bestimmt.

Alternativ zu Kennfeldern können auch Rechenalgorithmen genutzt werden, in denen der Kraftstoffeintrag bzw. der Kraftstoffaustrag auf der Grundlage der oben genannten Betriebsparameter bestimmt wird.

In einer Weiterbildung des Verfahrens wird das normierte Kraftstoffäquivalent periodisch für eine Funktion zur Berechnung eines Ölwechselzeitpunkts bereitgestellt. Damit kann die Bestimmung eines Ölwechselzeitpunkts verbessert werden.

Der Periodenzeitraum zwischen 2 und 3 Sekunden ist mit der Taktung der üblichen Steuergeräte konform und liegt bevorzugt bei 2,4 Sekunden.

In einer Weiterbildung des Verfahrens kann der Startwert der Kraftstoffsumme in Abhängigkeit von einem Betriebskriterium, insbesondere ein Zündwechsel und/oder ein Ölwechsel, wählbar sein. Beispielsweise kann nach einem Ölwechsel die Kraftstoffsumme auf null resettiert werden, da dann keinerlei Kraftstoff mehr im Öl angereichert ist.

Bei einem Zündwechsel wird ein zuletzt abgespeicherter Wert übernommen.

Die Erfindung betrifft weiterhin ein Steuergerät, das ausgebildet ist und eingerichtet ist, um das oben dargestellte Verfahren zur Bilanzierung einer Kraftstoffmasse in einem Schmiermittel auszuführen. Mithilfe eines so ausgestatteten Steuergeräts lässt sich sowohl die Kraftstoffqualität als auch ein Ölwechselzeitpunkt zuverlässiger bestimmen.

Gleiches gilt für einen Verbrennungsmotor mit einer Schmiermittelversorgungsanordnung und einem Steuergerät, welches dazu ausgebildet und eingerichtet ist, um das erfindungsgemäße Verfahren zur Bilanzierung einer Kraftstoffmasse in einem Schmiermittel auszuführen, und ein Kraftfahrzeug mit einem solchen Verbrennungsmotor.

Ausführungsbeispiele der Erfindung werden nun beispielhaft und unter Bezugnahme auf die beigefügte Zeichnung beschrieben, dabei zeigt:

Fig. 1    eine schematische Darstellung eines Ölkreislaufsystems

Fig. 2    ein Blockdiagramm als Bestandteil eines Motorsteuergeräts durch Durchführung des erfindungsgemäßen Verfahrens und

Fig. 3    ein vereinfachtes Ablaufdiagramm, welches ein Ausführungsbeispiel des erfindungsgemäßen Verfahrens illustriert.

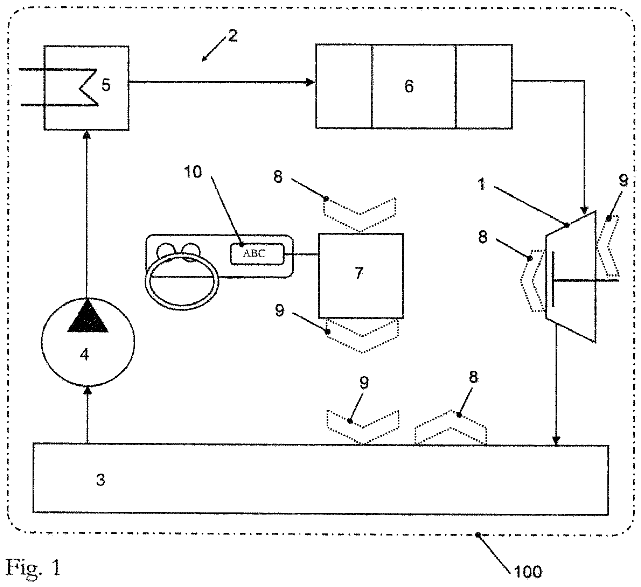

Fig. 1 zeigt einen Verbrennungsmotor 1, der eine Schmiermittelversorgungsanordnung 2 umfasst. Verbrennungsmotor 1 und Schmiermittelversorgungsanordnung 2 sind dabei Bestandteil eines Kraftfahrzeugs 100 dargestellt.

Die Schmiermittelversorgungsanordnung 2 umfasst einen Ölvorrat 3, in dem das Schmiermittel, hier ein Motoröl, gesammelt ist. Der Ölvorrat kann bspw. in einer Ölwanne aufgenommen werden.

Zur Schmierung wird das Motoröl mittels einer Pumpe 4 durch einen Wärmetauscher 5, der als Ölkühler dient, einen Ölfilter 6 in den Verbrennungsmotor 1 geleitet und wird dort über Verteilungsleitungen an die einzelnen Schmier- und Lagerstellen des Motors geführt.

Ein Motorsteuergerät 7 ist über mehrere Signal- und Dateneingänge 8 und Signal- und Datenausgänge 9 mit dem Verbrennungsmotor 1 und Komponenten der Schmiermittelversorgungsanordnung 2 verbunden. Die Motorsteuerung 7 kann ebenfalls über Signal- und Dateneingänge bzw. -ausgänge 8, 9 mit Anzeigevorrichtungen oder einem Bildschirm im Fahrzeuginnern verbunden sein, um bestimmte Betriebs- und Wartungszustände anzuzeigen.

In der Motorsteuerung 7 sind hardware- und/oder softwaremäßig Verfahrensblöcke realisiert, die so zusammenwirken, dass sie ein normiertes Kraftstoffäquivalent $Ä_n$ bestimmen, welches geeignet ist, die Bestimmung eines Ölwechselzeitpunkts bzw. die Länge eines Ölwechselintervalls zu unterstützen.

Das Verfahren zeichnet sich dadurch aus, dass für bestimmte Betriebsmodi BM ein Kraftstoffeintrag in das Motoröl bestimmt wird. Dies geschieht über applizierte Kennfelder. Die erforderlichen Daten für diese Kennfelder können in Versuchen am Motorprüfstand und/oder durch Simulationsverfahren ermittelt werden und werden mit dem realen Kraftstoffeintrag in das Motoröl in Gewichts-% pro Stunde abgeglichen und als Eintragsfaktoren ausgegeben.

In anderen Betriebsmodi BM wird ein Kraftstoffaustrag bestimmt. Hier sind in anderen Kennlinien oder Kennfeldern in Abhängigkeit von geeigneten Zustandsgrößen des Motors entsprechende Austragsfaktoren appliziert.

Die Differenz vom Kraftstoffeintrag und Kraftstoffaustrag wird dann fortlaufend über ein definiertes Zeitintervall summiert. Die Länge eines solchen Zeitintervalls beträgt 1 bis 3 Sekunden (insbesondere 2,4 s). Dieser Summenwert wird auf eine reale Motorölmasse $m_{Öl}$ in der Ölwanne 3 normiert und als normiertes Kraftstoffäquivalent $Ä_n$ also als eine Art Verschleißäquivalent der Funktion zur Ölwechselberechnung zur Verfügung gestellt. Dabei wird dann berücksichtigt, dass ein anhaltend ermittelter Kraftstoffeintrag ein notwendiges Ölwechselintervall verkürzt und es wird ein früherer Ölwechselzeitpunkt signalisiert.

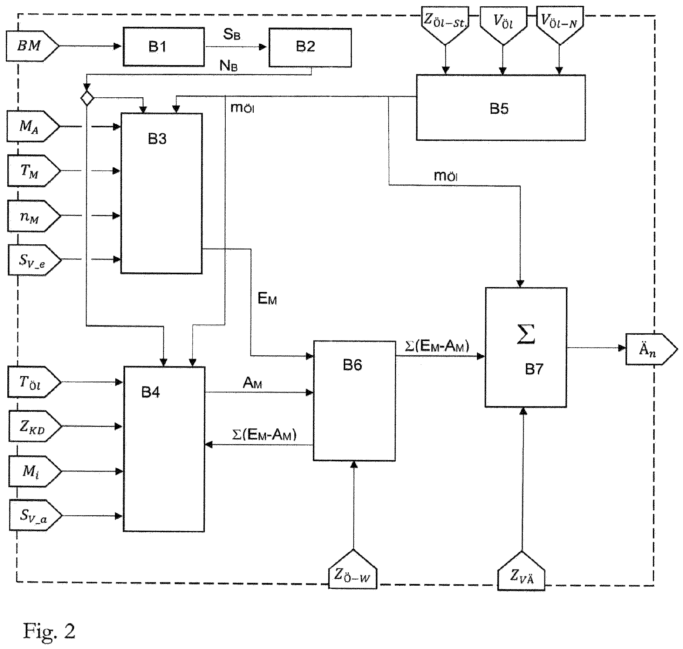

Die Bestimmung des normierten Kraftstoffäquivalents $Ä_n$ wird nun anhand des Blockdiagramms in Fig. 2 erläutert.

Im Block Betriebsartenerkennung B1 wird der aktuelle Betriebsmodus BM eingelesen und ein Betriebsstatus $B_s$ ausgegeben, dem dann in einem Block Betriebsartenauswahl B2 eine der Betriebsart entsprechende Nummer $N_B$ zugeordnet wird, die angibt, ob ein Betriebszustand BM mit Kraftstoffeintrag oder mit Kraftstoffaustrag vorliegt.

Anhand dieser Nummer wird dann ein Block Kraftstoffeintrag B3 oder ein Block Kraftstoffaustrag B4 aktiviert. Je nach Nummer $N_B$ des Betriebsmodus wird dann der entsprechende Block B3 oder B4 aktiviert.

Im Block Kraftstoffeintrag B3 werden dann die Größen Momentenanforderung $M_A$, Motortemperatur $T_M$, Motodrehzahl $n_M$ berücksichtigt und mit Hilfe eines oder mehrerer Kennfelder oder Kennlinien werden die entsprechenden applizierten Gewichts-Prozente für den Kraftstoffeintrag in das Motoröl ausgelesen und auf die jeweilige Motorölmasse normiert. Dieser normierte Wert für den Eintrag der Kraftstoffmasse $E_M$ wird dann weiterverarbeitet.

Im Block B5 wird eine Ölmasse $m_{Öl}$ bestimmt, die sich aus dem Ölvolumen $V_{Öl}$, einer Ölnachfüllmenge $V_{Öl-n}$ und einem Status des Ölfüllstands $Z_{Öl-St}$ ergibt.

Gibt die Nummer $N_B$ einen Betriebszustand mit Kraftstoffaustrag an wird im Block Kraftstoffaustrag B4 in Abhängigkeit von anderen Betriebskriterien des Motors ein Kraftstoffaustrag $A_M$ ermittelt. Dazu dienen z.B. Größen wie inneres Moment $M_i$, Motoröltemperatur $T_{Öl}$ oder ein Status der Kolbenkühldüsen $Z_{KD}$, denen Betriebspunkte in Kennlinien bzw. Kennfeldern zugeordnet werden. Daraus werden dann applizierten Gewichts-Prozente Kraftstoffaustrag $A_M$ ausgelesen und auf die Motorölmasse $m_{Öl}$ normiert.

Sowohl in den Blöcken Kraftstoffeintrag B3 und Kraftstoffaustrag B4 ist eine Verriegelungsfunktion vorgesehen, die über ein Statussignal $S_{V\_e}$ für den Kraftstoffeintrag und über ein Statussignal $S_{V\_a}$ für den Kraftstoffaustrag aktiviert wird. In den Verriegelungssignalen wird berücksichtigt, wenn Fehler bei der Bestimmung der entsprechenden Betriebskriterien/- größen auftreten. Für solche Fälle wird die Bestimmung gesperrt.

Die Ergebnisse von B3 und B4 werden im Block Kraftstoffsumme B6 weiterverarbeitet. Im Block Kraftstoffsumme B6 wird die Differenz aus Kraftstoffeintrag $E_M$ und Kraftstoffaustrag $A_M$ summiert und der maximale Wert dieser Summe wird kontinuierlich zwischengespeichert. Nach einem Zündungswechsel wird die im vorherigen Zyklus bestimmte Summe wieder als Startwert eingelesen und zwar im Block Kraftstoffaustrag B4.

Bei einem zwischen Zündungswechseln erfolgter Ölwechsel wird über ein Resetsignal für diesen Ölwechsel $Z_{Öl-w}$ der Summenwert resettiert Der Summenwert geht nur in den Block B4 für Kraftstoffaustrag. Die Höhe der Masse in der Ölwanne (Motoröl + Kraftstoffeintrag) bestimmt auch die Kraftstoffaustragsmenge. Je höher der Kraftstoffeintrag desto höher ist auch der Kraftstoffaustrag im gleichen Betriebspunkt.

Im dargestellten Ausführungsbeispiel werden die Werte für den Kraftstoffeintrag $E_M$ bzw. den Kraftstoffaustrag $A_M$ in einem 100 ms-Raster bestimmt Alle 2,4 Sekunden wird ein Mittelwert $W_M$ (im Block B6) ermittelt:

$$W_m = \frac{1}{24} \sum_{k=1}^{24} (E_M - A_M)$$

Diese Mittelwertbildung wird durch den Statusverschleißäquivalent $Z_{Vä}$ getriggert.

Das normierte Kraftstoffäquivalent $Ä_n$ ergibt sich dann unter Berücksichtigung eines zulässigen Kraftstoffeintrags in [%] $E_{Mzul}$ aus der Formel:

$$Ä_n = \frac{\frac{1}{24} \sum_{k=1}^{24} (E_M - A_M)}{m_{Öl} \cdot E_{Mzul}} * 100$$

In einem Zeitraum, in dem die gespeicherte summierte Differenz nicht steigt, weil kein Kraftstoffeintrag $E_M$ oder ein Kraftstoffaustrag $A_M$ erfolgt, wird die Differenz $E_M - A_M$ auf null gesetzt. Damit wird sichergestellt, dass nur der an sich schädliche Kraftstoffeintrag bei der Berechnung des normierten Kraftstoffäquivalents $Ä_n$ berücksichtigt wird. In anderen Worten: Wenn kein Eintrag erfolgt oder der Austrag größer als der Eintrag ist, wird Null summiert. Erst wenn der Eintrag wieder über dem Austrag liegt, d. h. neuer Kraftstoff im Öl dazukommt, wird wieder die Differenz $E_M - A_M$ addiert.

Das normierte Kraftstoffäquivalents $Ä_n$ wird dann in eine Berechnungsroutine übergeben, die im Steuergerät 7 durchgeführt wird, um einen Ölwechselzeitpunkt zu bestimmen. Durch die oben beschriebene Bilanzierung werden der Zeitraum bzw. der Zeitpunkt für die Bestimmung des Ölwechsels damit besser bestimmbar.

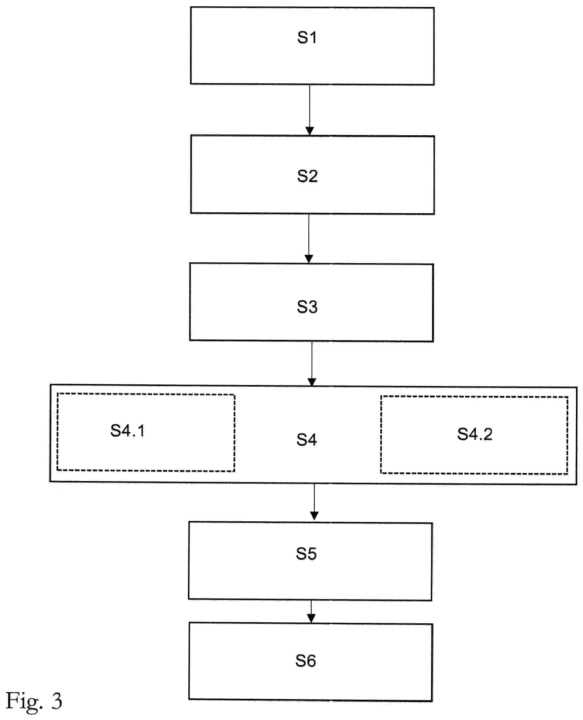

Fig. 3 zeigt einen schematischen Ablauf des Verfahrens, welches die Schritte umfasst:

S1:     Starten eines Betriebszyklus des Verbrennungsmotors 1

S2:     Erfassen eines Betriebsmodus BM

S3:     Bestimmen einer Motorölmasse $M_{\ddot{O}}$

S4:     Kontinuierliches Bestimmen einer Kraftstoffdifferenzmasse in der Motorölmasse in der Abhängigkeit vom erfassten Betriebsmodus BM

S5:     Kontinuierliches Bestimmen einer Kraftstoffsumme aus einem Startwert der Kraftstoffmenge und aus der summierten Kraftstoffdifferenzmasse

S6:     Bestimmung eines Kraftstoffäquivalents $\ddot{A}_n$ aus der Kraftstoffsumme.

Dabei kann im Schritt S4 wahlweise wechseln in Schritten S4.1 bzw. S4.2 ein Kraftstoffeintrag $E_M$ oder ein Kraftstoffaustrag $A_M$ berücksichtigt werden.

Weitere Varianten und Ausführungen der Erfindung ergeben sich für den Fachmann im Rahmen der Ansprüche.

**Bezugszeichenliste**

| | |
|---|---|
| 100 | Kraftfahrzeug |
| 1 | Verbrennungsmotor |
| 2 | Schmiermittelversorgungsanordnung |
| 3 | Ölvorrat, Ölwanne |
| 4 | Pumpe |
| 5 | Wärmetauscher |
| 6 | Ölfilter |
| 7 | Motorsteuergerät |
| 8 | Signal-/Dateneingänge |
| 9 | Signal-/Datenausgänge |
| 10 | Display, Anzeige |
| B1 | Betriebsartenerkennung |
| B2 | Betriebsdatenauswahl |
| B3 | Kraftstoffeintrag |
| B4 | Kraftstoffaustrag |
| B5 | Ölmasse |
| B6 | Kraftstoffsumme |
| B7 | Äquivalent |
| BM | aktueller Betriebsmodus |
| Än | normiertes Kraftstoffäquivalent |
| $S_B$ | Status Betriebsmodus |
| $N_B$ | Nummer Betriebsmodus |
| $M_A$ | Momentenanforderung |
| $T_M$ | Motortemperatur |
| $n_M$ | Motordrehzahl |
| $S_{V\_e}$ | Verriegelung Kraftstoffeintrag |
| $E_M$ | Kraftstoffeintrag |
| $m_{\ddot{O}l}$ | Ölmasse |
| $V_{\ddot{O}l}$ | Ölmasse |
| $Z_{\ddot{O}l\_St\cdot}$ | Status des Ölfüllstands |
| $V_{\ddot{O}l\_N}$ | Ölnachfüllmenge |
| $A_M$ | Kraftstoffaustrag |
| $T_{\ddot{O}l}$ | Öltemperatur |
| $Z_{KD}$ | Zustand/Status der Kolbenkühldüsen |
| $M_i$ | Inneres Moment |
| $S_{V\_a}$ | Verriegelung Kraftstoffaustrag |
| $Z_{\ddot{O}l\text{-}w}$ | Status Ölwechsel, Ölwechselsignal |
| $Z_{V\ddot{a}}$ | Status zur Berechnung des Verschleißäquivalents |

**Patentansprüche**

1. Verfahren zur Bilanzierung einer Kraftstoffmasse in einem Schmiermittel eines Verbrennungsmotors (1) beim Betrieb des Verbrennungsmotors (1) mit:

    - Starten eines Betriebszyklus des Verbrennungsmotors (1)
    - Erfassen eines Betriebsmodus (BM, $S_B$; $N_B$)
    - Bestimmen einer Motorölmasse ($m_{\ddot{O}l}$)
    - kontinuierliches Bestimmen einer Kraftstoffdifferenzmasse ($E_M - A_M$) aus einem Kraftstoffeintrag ($E_M$) und einem Kraftstoffaustrag ($A_M$) in der Motorölmasse ($m_{\ddot{O}l}$) in Abhängigkeit vom erfassten Betriebsmodus (BM, $S_B$; $N_B$)
    - kontinuierliches Bestimmen einer Kraftstoffsumme aus einem Startwert der Kraftstoffsumme und aus der summierten Kraftstoffdifferenzmasse ($\Sigma\ (E_M - A_M)$)
    - Bestimmung eines normierten Kraftstoffäquivalents ($\ddot{A}_n$) aus der Kraftstoffsumme, wobei das normierte Kraftstoffäquivalent ($\ddot{A}_n$) durch die Bestimmungsgleichung

$$\ddot{A}_n = \frac{\frac{1}{24}\sum_{k=1}^{24}(E_M - A_M)}{m_{\ddot{O}l}\cdot E_{Mzul}} * 100$$

    mit der Motorölmasse ($m_{\ddot{O}l}$) und einem zulässigen Kraftstoffeintrag ($E_{Mzul}$) bestimmt wird, wobei der Summand mit Index k = 1 der Startwert ist.

2. Verfahren nach Anspruch 1, wobei beim Bestimmen der Kraftstoffdifferenzmasse in Abhängigkeit vom Betriebsmodus (BM) wechselweise ein Kraftstoffeintrag ($E_M$) oder ein Kraftstoffaustrag ($A_M$) bestimmt wird.

3. Verfahren nach Anspruch 1 oder 2, wobei das Erfassen eines Betriebsmodus umfasst:

    - Unterscheiden und Wählen zwischen einem Betriebsmodus (BM, $S_B$; $N_B$) mit Kraftstoffeintrag ($E_M$) und einem Betriebsmodus mit Kraftstoffaustrag ($A_M$).

4. Verfahren nach Anspruch 3, wobei in dem Betriebsmodus (BM, $S_B$; $N_B$) mit Kraftstoffeintrag ($E_M$) der Kraftstoffeintrag auf der Grundlage einer der folgenden Betriebsparameter bestimmt wird: Momentenanforderung (MA), Motortemperatur ($T_M$), Motordrehzahl ($n_M$).

5. Verfahren nach Anspruch 3, wobei in dem Betriebsmodus (BM, $S_B$; $N_B$) mit Kraftstoffaustrag ($A_M$) der Kraftstoffaustrag auf der Grundlage einer der folgenden Betriebsparameter bestimmt wird: Schmiermitteltemperatur ($T_{\ddot{O}l}$), inneres Moment ($M_i$).

6. Verfahren nach Anspruch 5, wobei in dem Betriebsmodus (BM, $S_B$; $N_B$) mit Kraftstoffaustrag ($A_M$) der Kraftstoffaustrag auf der Grundlage eines Kolbenkühldüsenstatus ($Z_{KD}$) bestimmt wird.

7. Verfahren nach Anspruch 4, 5 oder 6 wobei der Kraftstoffeintrag ($E_M$) und/oder der Kraftstoffaustrag ($A_M$) unter Verwendung eines wenigstens einen Betriebsparameter (MA; $T_M$; $n_M$; $T_{\ddot{O}l}$; $M_i$; $Z_{KD}$) berücksichtigenden Kennfelds bestimmt wird.

8. Verfahren nach einem der Ansprüche 4, 5, oder 6, wobei der Kraftstoffeintrag ($E_M$) und/oder der Kraftstoffaustrag ($A_M$) unter Verwendung eines wenigstens einen Betriebsparameter (MA; $T_M$; $n_M$; $T_{\ddot{O}l}$; $M_i$; $Z_{KD}$) berücksichtigenden Algorithmus bestimmt wird.

9. Verfahren nach einem der vorhergehenden Ansprüche, wobei das normierte Kraftstoffäquivalent ($\ddot{A}_n$) periodisch für eine Funktion zur Berechnung eines Ölwechselzeitpunktes bereitgestellt wird.

10. Verfahren nach Anspruch 9, wobei die Periodendauer zwischen 2 und 3 Sekunden und bevorzugt bei 2,4 Sekunden liegt.

11. Verfahren nach einem der vorhergehenden Ansprüche, wobei der Startwert der Kraftstoffsumme in Abhängigkeit von einem Betriebskriterium, nämlich ein Zündwechsel, wählbar ist.

**12.** Verfahren nach einem der Ansprüche 1 bis 10, wobei der Startwert der Kraftstoffsumme in Abhängigkeit von einem Betriebskriterium, nämlich ein Ölwechsel, wählbar ist.

**13.** Steuergerät (7), das ausgebildet und eingerichtet ist, um ein Verfahren zur Bilanzierung einer Kraftstoffmasse in einem Schmiermittel nach einem der Ansprüche 1 bis 12 auszuführen.

**14.** Verbrennungsmotor (1) mit einer Schmiermittelversorgungsanordnung (2) und einem Steuergerät (7) nach Anspruch 13.

**15.** Kraftfahrzeug (100) mit einem Verbrennungsmotor (1) nach Anspruch 14.

**Claims**

**1.** Method for balancing a fuel mass in a lubricant of an internal combustion engine (1) during operation of the internal combustion engine (1), comprising:

- starting an operating cycle of the internal combustion engine (1)
- detecting an operating mode (BM, $S_B$; $N_B$)
- determining an engine oil mass ($m_{Öl}$)
- continuously determining a fuel differential mass ($E_M - A_M$) from a fuel input ($E_M$) and a fuel output ($A_M$) in the engine oil mass ($m_{Öl}$) on the basis of the detected operating mode (BM, $S_B$; $N_B$)
- continuously determining a fuel sum from a starting value of the fuel sum and from the summed fuel differential mass ($\Sigma (E_M - A_M)$)
- determining a normalized fuel equivalent ($Ä_n$) from the fuel sum, wherein the normalized fuel equivalent ($Ä_n$) is determined by the determination equation

$$\ddot{A}_n = \frac{\frac{1}{24}\sum_{k=1}^{24}(E_M - A_M)}{m_{Öl} \cdot E_{Mzul}} * 100$$

with the engine oil mass ($m_{Öl}$) and a permissible fuel input ($E_{Mzul}$), wherein the summand where index k = 1 is the starting value.

**2.** Method according to claim 1, wherein, when the fuel differential mass is determined, either a fuel input ($E_M$) or a fuel output ($A_M$) is determined on the basis of the operating mode (BM).

**3.** Method according to claim 1 or 2, wherein detecting an operating mode comprises:

- differentiating and selecting between an operating mode (BM, $S_B$; $N_B$) with fuel input ($E_M$) and an operating mode with fuel output ($A_M$).

**4.** Method according to claim 3, wherein, in the operating mode (BM, $S_B$; $N_B$) with fuel input ($E_M$), the fuel input is determined on the basis of one of the following operating parameters:
torque requirement (MA), engine temperature ($T_M$), engine speed ($n_M$).

**5.** Method according to claim 3, wherein, in the operating mode (BM, $S_B$; $N_B$) with fuel output ($A_M$), the fuel output is determined on the basis of one of the following operating parameters:
lubricant temperature ($T_{Öl}$), inner torque ($M_i$).

**6.** Method according to claim 5, wherein, in the operating mode (BM, $S_B$; $N_B$) with fuel output ($A_M$), the fuel output is determined on the basis of a piston cooling nozzle status ($Z_{KD}$).

**7.** Method according to claim 4, 5 or 6, wherein the fuel input ($E_M$) and/or the fuel output ($A_M$) is determined using a map which takes into consideration at least one operating parameter (MA; $T_M$; $n_M$; $T_{Öl}$; Mi; $Z_{KD}$).

**8.** Method according to claim 4, 5 or 6, wherein the fuel input ($E_M$) and/or the fuel output ($A_M$) is determined using an algorithm which takes into consideration at least one operating parameter (MA; $T_M$; $n_M$; $T_{Öl}$; $M_i$; $Z_{KD}$).

9. Method according to any of the preceding claims, wherein the normalized fuel equivalent ($Ä_n$) is periodically provided for a function to calculate an oil change time.

10. Method according to claim 9, wherein the period is between 2 and 3 seconds and preferably 2.4 seconds.

11. Method according to any of the preceding claims, wherein the starting value of the fuel sum can be selected on the basis of an operating criterion, namely an ignition change.

12. Method according to any of claims 1 to 10, wherein the starting value of the fuel sum can be selected on the basis of an operating criterion, namely an oil change.

13. Control unit (7) which is designed and configured to perform a method for balancing a fuel mass in a lubricant according to any of claims 1 to 12.

14. Internal combustion engine (1) comprising a lubricant supply arrangement (2) and a control unit (7) according to claim 13.

15. Motor vehicle (100) comprising an internal combustion engine (1) according to claim 14.


## Revendications

1. Procédé d'équilibrage d'une masse de carburant dans un lubrifiant d'un moteur à combustion interne (1) lors du fonctionnement du moteur à combustion interne (1) comportant :

   - le démarrage d'un cycle de fonctionnement du moteur à combustion interne (1)
   - la détection d'un mode de fonctionnement (BM, $S_B$ ; $N_B$)
   - la détermination d'une masse d'huile moteur ($m_{Öl}$)
   - la détermination en continu d'une masse différentielle de carburant ($E_M$ - $A_M$) à partir d'un apport de carburant ($E_M$) et d'une évacuation de carburant ($A_M$) dans la masse d'huile moteur ($m_{Öl}$)en fonction du mode de fonctionnement (BM, $S_B$ ; $N_B$) détecté
   - la détermination en continu d'une somme de carburant à partir d'une valeur initiale de la somme de carburant et de la masse différentielle de carburant ($\Sigma$ ($E_M$ - $A_M$)) additionnée
   - la détermination d'un équivalent carburant normalisé ($Ä_n$) à partir de la somme de carburant, dans lequel l'équivalent carburant normalisé ($Ä_n$) est déterminé par l'équation de détermination

$$Ä_n = \frac{\frac{1}{24} \sum_{k=1}^{24} (E_M - A_M)}{m_{Öl} \cdot E_{Mzul}} * 100$$

   avec la masse d'huile moteur ($m_{Öl}$) et un apport de carburant admissible ($E_{Mzul}$), dans lequel le terme d'indice k = 1 est la valeur de départ.

2. Procédé selon la revendication 1, dans lequel, lors de la détermination de la masse différentielle de carburant, un apport de carburant ($E_M$) ou une évacuation de carburant ($A_M$) est déterminé(e) sélectivement en fonction du mode de fonctionnement (BM).

3. Procédé selon la revendication 1 ou 2, dans lequel la détection d'un mode de fonctionnement comprend :

   - la distinction et la sélection entre un mode de fonctionnement (BM, $S_B$ ; $N_B$) avec apport de carburant ($E_M$) et un mode de fonctionnement avec évacuation de carburant ($A_M$).

4. Procédé selon la revendication 3, dans lequel, dans le mode de fonctionnement (BM, $S_B$ ; $N_B$) avec apport de carburant ($E_M$), l'apport de carburant est déterminé sur la base de l'un des paramètres de fonctionnement suivants : demande de couple (MA), température de moteur ($T_M$), régime moteur ($n_M$).

**5.** Procédé selon la revendication 3, dans lequel, dans le mode de fonctionnement (BM, $S_B$ ; $N_B$) avec évacuation de carburant ($A_M$), l'évacuation de carburant est déterminée sur la base de l'un des paramètres de fonctionnement suivants :
température de lubrifiant ($T_{Öl}$), couple interne ($M_i$).

**6.** Procédé selon la revendication 5, dans lequel, dans le mode de fonctionnement (BM, $S_B$ ; $N_B$) avec évacuation de carburant ($A_M$), l'évacuation de carburant est déterminée sur la base d'un état de buse de refroidissement de piston ($Z_{KD}$).

**7.** Procédé selon la revendication 4, 5 ou 6, dans lequel l'apport de carburant ($E_M$) et/ou l'évacuation de carburant ($A_M$) sont déterminés à l'aide d'un diagramme caractéristique tenant compte d'au moins un paramètre de fonctionnement (MA ; $T_M$ ; $n_M$ ; $T_{Öl}$ ; $M_i$ ; $Z_{KD}$).

**8.** Procédé selon l'une des revendications 4, 5, ou 6, dans lequel l'apport de carburant ($E_M$) et/ou l'évacuation de carburant ($A_M$) sont déterminés à l'aide d'un algorithme prenant en compte au moins un paramètre de fonctionnement (MA ; $T_M$ ; $n_M$ ; $T_{Öl}$ ; $M_i$ ; $Z_{KD}$).

**9.** Procédé selon l'une des revendications précédentes, dans lequel l'équivalent carburant normalisé ($Ä_n$) est fourni périodiquement à une fonction de calcul d'un moment de vidange d'huile.

**10.** Procédé selon la revendication 9, dans lequel la durée de période est comprise entre 2 et 3 secondes et est de préférence de 2,4 secondes.

**11.** Procédé selon l'une des revendications précédentes, dans lequel la valeur de départ de la somme de carburant peut être sélectionnée en fonction d'un critère de fonctionnement, à savoir un changement d'allumage.

**12.** Procédé selon l'une des revendications 1 à 10, dans lequel la valeur de départ de la somme de carburant peut être sélectionnée en fonction d'un critère de fonctionnement, à savoir une vidange d'huile.

**13.** Appareil de commande (7) qui est conçu et agencé pour mettre en œuvre un procédé d'équilibrage d'une masse de carburant dans un lubrifiant selon l'une des revendications 1 à 12.

**14.** Moteur à combustion interne (1) comportant un agencement d'alimentation en lubrifiant (2) et un appareil de commande (7) selon la revendication 13.

**15.** Véhicule automobile (100) comportant un moteur à combustion interne (1) selon la revendication 14.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2866957 A1
- DE 102014013709 A1